# EUROPÄISCHE PATENTANMELDUNG

(11) **EP 4 014 744 A1**
(43) Veröffentlichungstag der Anmeldung: **22.06.2022**
(21) Anmeldenummer: 20215916.6
(22) Anmeldetag: 21.12.2020
(51) Int. Cl.: A22C 11/10

(54) **VORRICHTUNG UND VERFAHREN ZUM EINSCHNÜREN UND/ODER ABTRENNEN EINES WURSTSTRANGS**

(71) Anmelder: Albert Handtmann Maschinenfabrik GmbH & Co. KG, 88400 Biberach (DE)
(72) Erfinder: Schliesser, Markus, 88489 Wain (DE); Baechtle, Manfred, 88433 Schemmerhofen (DE); Speh, Andreas, 88444 Ummendorf (DE)
(74) Vertreter: Grünecker Patent- und Rechtsanwälte PartG mbB

(57) **Zusammenfassung**

Die Erfindung betrifft eine Vorrichtung 10 zum Einschnüren und/oder Abteilen eines sich in Transportrichtung T bewegenden Wurststrangs 20 mit zwei in Bezug auf den Wurststrang 20 gegenüberliegenden Abteileinrichtungen 1a, 1b, die jeweils umfassen:
- eine um eine erste Achse A, C drehbar gelagerte Scheibe 2a, 2b,
- eine darüber angeordnete um eine zweite Achse B, D mit einem Achsabstand x zu der ersten Achse A, C drehbar gelagerten Scheibe 3a, 3b,
- mindestens zwei Verbindungselementen 4a ,4b, von denen zumindest eines ein Verdrängerelement 5a, 5b aufweist,
wobei ein erstes Ende des jeweiligen Verbindungselements 4a, 4b in der ersten Scheibe 2a, 2b mit einem jeweiligen Abstand r zur ersten Achse A, C drehbar gelagert ist und ein zweites Ende in der zweiten Scheibe 3a, 3b mit dem gleichen Abstand r zur zweiten Achse B, D drehbar gelagert ist, wodurch die Verbindungselemente 4a, 4b derart geführt werden, dass das mindestens eine Verdrängerelement 5a, 5b während seiner Rotation um die erste Achse A, C stets unter einem vorbestimmten Winkel, insbesondere 90° zur Transportrichtung T ausgerichtet ist.

## Beschreibung

Die Erfindung betrifft eine Vorrichtung und Verfahren zum Einschnüren und/oder Abteilen eines sich in Transportrichtung bewegenden Wurststrangs.

Würste werden in Form eines Wurststrangs erzeugt, indem z.B. entweder pastöse Masse über eine Füllmaschine in eine Wursthülle ausgestoßen wird oder aber mithilfe einer Koextrusionseinrichtung eine Wursthülle zusammen mit der pastösen Masse koextrudiert wird. In bekannter Weise werden zum Erzeugen von Einzelportionen Abteileinrichtungen vorgesehen, die die pastöse Masse verdrängen, d.h. den Wurststrang einschnüren und/oder abteilen, d.h. durchtrennen.

Eine solche Vorrichtung ist beispielsweise bereits in der EP2142004 B1 gezeigt. In dieser Vorrichtung sind bereits Verdrängerelemente mit einer integrierten Schneidklinge auf zwei gegenüberliegenden Drehscheiben angeordnet. Dabei werden die Verdrängerschneidelemente stets senkrecht zum Wurststrang über ein aufwendiges Planetengetriebe ausgerichtet. Die Konstruktion ist kompliziert, erlaubt keine hohen Portionierleistungen und ist wenig flexibel bei sich ändernden Produktparametern. Auch aus der EP1434490 B2 ist bereits eine Vorrichtung zum Portionieren einer Wurstmasse bekannt, wobei gegenüberliegende Verdrängerelemente vorgesehen sind, die jeweils auf zwei angetriebenen, in einer Ebene liegenden Scheiben angeordnet sind. Diese Ausführungsform hat den Nachteil, dass jeweils nur ein Verdrängerelement auf einer Seite angeordnet werden kann, wodurch keine hohe Portionsleistung möglich ist.

Ausgehend von diesem Stand der Technik liegt der vorliegenden Erfindung die Aufgabe zugrunde, eine Vorrichtung und ein Verfahren zum Einschnüren und/oder Abteilen mit vereinfachter Mechanik bereitzustellen, die gleichzeitig eine hohe Flexibilität und eine hohe Portionierleistung ermöglicht.

Erfindungsgemäß wird diese Aufgabe durch die Merkmale des Anspruchs 1 und 16 gelöst. Vorteilhafte Ausführungsformen ergeben sich aus den Unteransprüchen.

Gemäß der Erfindung ist eine Vorrichtung vorgesehen zum Einschnüren und/oder Abteilen eines sich in Transportrichtung T bewegenden Wurststrangs mit zwei in Bezug auf den Wurststrang gegenüberliegenden Abteileinrichtungen. Die Abteileinrichtungen weisen jeweils eine um eine erste Achse drehbar gelagerte Scheibe, sowie eine in Vertikalrichtung versetzt angeordnete um eine zweite Achse mit einem Achsabstand x zur ersten Achse drehbaren Scheibe auf. Die zweite Scheibe ist vorzugsweise über der ersten Scheibe angeordnet. Die zweite Scheibe kann in der zweiten Achse drehbar gelagert sein. Ferner weist die Vorrichtung mindestens zwei Verbindungselemente auf, von denen zumindest eines ein Verdrängerelement aufweist. Die jeweiligen Verbindungselemente sind insbesondere in der ersten Scheibe mit einem jeweiligen Abstand zur ersten Achse drehbar gelagert und in der zweiten Scheibe mit dem gleichen Abstand zur zweiten Achse. Somit können die Verbindungselemente derart geführt werden, dass das mindestens eine Verdrängerelement während seines Umlaufs um die erste Achse stets unter einem vorbestimmten Winkel, insbesondere 90° zur Transportrichtung T ausgerichtet bleibt. Die erste und zweite Achse können aber müssen nicht zwangsläufig eine Ebene aufspannen, die rechtwinklig zur Transportrichtung T steht. Die Achsen können auch eine Ebenen aufspannen, die versetzt zur Transportrichtung verläuft, d.h. unter einem Winkel zur Transportrichtung verläuft, z. B. unter einem Winkel von 30°. Dann müssen die Verdrängerelemente ebenfalls um diesen Winkel schräg zum Verbindungselement gestellt sein.

Unter Einschnüren versteht man das Verdrängen der pastösen Masse im Wurststrang, wodurch der Wurststrang in Einzelportionen unterteilt wird und unter Abteilen das Durchtrennen des Wurststrangs in Einzelportionen oder Wurstketten mit einer bestimmten Anzahl an Einzelportionen.

Mit diesem sehr einfachen Mechanismus kann stets gewährleistet werden, dass die Verdrängerelemente bei ihrem Umlauf korrekt ausgerichtet sind. Eine entsprechende Lösung ist einfach und kostengünstig zu realisieren. Die erfindungsgemäße Lösung ermöglicht, dass mehrere Verdrängerelemente pro Scheibe vorgesehen sein können, sodass sich die Portionierleistung wesentlich erhöhen kann. Insbesondere können Portionierleistungen von mehr als 3000 Portionen/Minute realisiert werden. Durch den leichten Aufbau der Parallelführung und das resultierende geringe Massenmoment können die erste und zweite Achse mit hohen, insbesondere auch dynamisch veränderbaren Drehzahlen (z.B. bis zu 2000 U/min) betrieben werden.

Die erfindungsgemäße Vorrichtung kann auch einfach an unterschiedliche Portionslängen angepasst werden, indem beispielsweise die Anzahl der Verdrängerelemente pro Scheibe entsprechend reduziert werden und/oder die Drehzahl der angetriebenen ersten Scheibe entsprechend angepasst wird. Vorteilhafterweise wird die parallele Führung der Verdrängerelemente ohne Getriebestufe durchgeführt, sondern durch das jeweilige Verbindungselement und die Anordnung der Aufnahme durch eine untere und obere Scheibe. Durch diesen einfachen Aufbau können sehr viele und in sehr engem Abstand angeordnete Verdrängerelemente angebracht werden.

Der Abstand r kann für unterschiedliche Verbindungselemente gleich oder unterschiedlich sein. Das bedeutet, dass die Verbindungselemente entweder alle auf einem Kreis mit Radius r drehbar in der ersten und zweiten Scheibe gelagert sind oder aber ein Teil auf einem Kreis mit einem ersten Radius und ein Teil auf einem Kreis mit einem zweiten Radius. Wenn Verbindungselemente mit einem größeren Abstand r zur Drehachse angeordnet sind, dann ragen diese beim Abteilen weiter in den Wurststrang hinein und können zum Abteilen, d.h. zum Durchtrennen verwendet werden, während die Verbindungselemente, die mit einem kleineren Abstand r zur ersten und zweiten Drehachse angeordnet sind, nur zum Einschnüren bzw. Verdrängen verwendet werden können. Dies ermöglicht, dass baugleiche Verdrängerelemente einmal zum Abteilen und ein andermal zum Durchtrennen verwendet werden können, in Abhängigkeit vom Abstand r zur Drehachse. Somit können auf einfache Art und Weise Einzelportionen oder Wurstketten mit einer bestimmten Anzahl an Würsten erzeugt werden. Durch Wahl eines bestimmten Abstands zu den Drehachsen kann so die Vorrichtung auch an verschiedene Wurstkaliber angepasst werden.

Die Verdrängerelemente der gegenüberliegenden Abteileinrichtungen werden soweit aufeinander zu bewegt, dass sie den Wurststrang einschnüren und/oder abtrennen.

Die Verdrängerelemente sind insbesondere plattenförmig ausgebildet und weisen eine Aussparung auf, deren Abmessung von der dem Wurstrang zugewandten Seite weg abnimmt und die insbesondere V-förmig ausgebildet ist. Diese einfache Ausgestaltung erlaubt den Einsatz zum Einschnüren und auch den Einsatz zum Durchtrennen durch Abscheren von sich aufeinander zu bewegenden Verdrängerelementen der gegenüberliegenden Abteileinrichtungen.

Gemäß einem bevorzugten Ausführungsbeispiel weist eine Abteileinrichtung mindestens zwei, insbesondere mindestens drei Verbindungselemente auf, und vorzugsweise mindestens ein Verdrängerelement, insbesondere mindestens drei Verdrängerelemente, also insbesondere mindestens ein Verdrängerelement pro Verbindungselement.

Wenn die Abteileinrichtung mindestens 3 Verdrängerelemente aufweist, kann die Produktionsleistung wesentlich gesteigert werden. Es ist auch möglich, dass mehr als 3 Verbindungselemente und mehr als 3 Verdrängerelemente vorgesehen sind.

Die Vorrichtung kann selbstverständlich auch mit zwei Verbindungselementen betrieben werden, allerdings ist der Start aus der Position, wenn die beiden Verdrängerelemente fluchten, undefiniert, da in dieser Position kein Drehmoment von der unteren Scheibe auf die obere Scheibe übertragen wird. Außerhalb dieser Totpunktlage ist eine Drehmomentübertragung möglich. Ein zuverlässigerer Betrieb kann mit drei oder mehr Verbindungselementen sinnvoll realisiert werden, insbesondere dann, wenn die zweiten Scheiben nicht anderweitig angetrieben sind.

Gemäß einer bevorzugten Ausführungsform sind die Verbindungselemente in Bohrungen in der ersten und zweiten Scheibe drehbar gelagert und insbesondere austauschbar angeordnet. Dies bringt den Vorteil mit sich, dass in Abhängigkeit eines jeweiligen Portionierauftrags die Verbindungselemente auf einfache Art und Weise derart gesteckt werden können, dass eine bestimmte Wurstlänge erzeugt wird und/oder eine bestimmte Anzahl an Portionen in einer Wurstkette.

Dabei können die Bohrungen auf der ersten und zweiten Scheibe entweder auf einem Kreis mit Radius r oder auf mehreren Kreisen mit unterschiedlichen Radien r angeordnet sein, wobei entweder immer Bohrungen mit gleichem Abstand zu der ersten und zweiten Achse mit Verbindungselementen belegt werden oder aber Bohrungen mit unterschiedlichen Abständen zu den Drehachsen. Somit kann die Vorrichtung auf einfache Art und Weise passend konfiguriert werden oder auch nachträglich beim Kunden umgerüstet werden, ohne dass hier große bauliche Maßnahmen notwendig sind. Die Verdrängerelemente können somit dann gemäß einem bevorzugten Ausführungsbeispiel in Abhängigkeit des Abstands r als Verdrängerelemente oder Schneidelemente eingesetzt werden.

Es ist aber auch möglich, dass die entsprechenden Verbindungselemente mit den Verdrängerelementen auf einem Kreis mit gleichem Durchmesser angeordnet sind, aber dass Verdrängerelemente unterschiedlich ausgebildet sind. Bei einem Verdrängerelement, das nur zum Einschnüren dient, ist der in Richtung Wurststrang betrachtet entfernteste Punkt der Aussparung im Verdrängerelement weiter hinten als der entfernteste Punkt der Aussparung eines Verdrängerelements, das zum Abtrennen dient. Das bedeutet, dass ein Verdrängerelement zum Einschnüren derart ausgebildet oder angeordnet ist, dass wenn sich die Verdrängerelemente der gegenüberliegenden Abteileinrichtungen senkrecht zum Wurststrang aufeinander zu bewegen, im Bereich der Aussparungen ein offener Bereich bleibt, derart, dass der Wurststrang nur eingeschnürt und nicht abgetrennt wird. Dienen die Verdrängerelemente zum Abtrennen, bewegen sich die Verdrängerelemente soweit in den Wurststrang hinein, dass in den überlagerten Verdrängerelementen kein offener Bereich bleibt und der Wurststrang durchtrennt wird.

Es können ein oder mehrere Verdrängerelemente zum Einschnüren dienen und mindestens ein Verdrängerelement zum Abteilen.

Gemäß einer bevorzugten Ausführungsform weist die Vorrichtung einen Antriebsmechanismus auf, über den vorzugsweise die ersten Scheiben (direkt oder indirekt über andere Scheiben) angetrieben werden, wobei vorzugsweise die Drehbewegung jeweils über die mindestens beiden Verbindungselemente auf die zweiten Scheiben übertragen wird. Der Antrieb der ersten Scheiben der beiden gegenüberliegenden Abteileinrichtungen erfolgt synchron gegenläufig. Es können auch alternativ oder zusätzlich die zweiten Scheiben angetrieben werden. Wenn die zweiten Scheiben über den ersten angeordnet sind und zur Mitte versetzt sind, können diese auch verzahnt ineinandergreifen. Dann müssen die ersten Scheiben nicht direkt gekoppelt sein.

Wesentlich ist lediglich, dass ein Antriebsmechanismus vorgesehen ist, derart, dass sich alle Scheiben mit gleicher Drehzahl (U/min) drehen und sich die ersten Scheiben der gegenüberliegenden Abteileinrichtungen synchron gegenläufig drehen.

Gemäß einer bevorzugten Ausführungsform umfasst die Vorrichtung eine Steuereinrichtung, die einen Antrieb, z.B. mindestens einen Motor, derart ansteuert, dass die ersten Scheiben mit konstanter oder mit variabler Drehzahl angetrieben werden. Somit kann beispielsweise auch ein bestimmtes Geschwindigkeitsprofil durchlaufen werden, derart, dass sich z.B. die Geschwindigkeit, d.h. Drehzahl eines Verdrängerelements in Abhängigkeit seiner Umlaufposition ändert, insbesondere beim Einschnüren oder Durchtrennen an die Geschwindigkeit des Wurststrangs angepasst werden kann.

Vorteilhafterweise entspricht die Geschwindigkeitskomponente des jeweiligen Verdrängerelements in Transportrichtung T beim Einschnüren und/oder Abteilen im Wesentlichen der Geschwindigkeit einer Transporteinrichtung zum Transportieren des Wurststrangs. Somit kann ein besonders zuverlässiges Einschnüren oder Abteilen realisiert werden.

Es ist aber auch möglich, dass die Geschwindigkeit der Verdrängerelemente beim Einschnüren und/oder Abteilen größer ist als die Geschwindigkeit der Transporteinrichtung. Dies hat wiederum den Vorteil, dass Portionen hergestellt werden können, die kürzer sind als der Abstand der Verdrängerelemente, z.B. bis zu 15 mm was die Portionsleistung nochmals erhöhen kann.

Eine dritte Möglichkeit besteht darin, dass die Verdrängerelemente, d.h. der Antrieb gestoppt wird, wenn die Verdrängerelemente gerade nicht einschnüren und/oder abteilen, so dass beliebig lange Portionen herstellbar sind.

Die Geschwindigkeit der Verdrängerelemente kann während eines Umlaufs also konstant sein oder variieren.

Es ist auch möglich, dass in Vertikalrichtung mehrere, z.B. zwei Verdrängerelemente an den Verbindungselementen angeordnet sind, sodass mehrere, z.B. zwei übereinander transportierte Wurststränge portioniert werden können.

Gemäß einem bevorzugten Ausführungsbeispiel sind die Verdrängerelemente an den Verbindungselementen abnehmbar angeordnet. Möchte man beispielsweise eine längere Einzelportion erzeugen, kann ein Verdrängerelement entnommen werden, sodass beispielsweise die doppelte Wurstlänge erzeugt werden kann oder aber das Verdrängerelement kann an einem anderen Verbindungselement befestigt werden, um eine andere Wurstlänge zu realisieren. Die Verdrängerelemente können aber auch beispielsweise an unterschiedlichen Verbindungselementen, die einen unterschiedlichen Abstand zur Drehachse aufweisen, angeordnet werden, um so entweder zum Abteilen oder zum Schneiden zu dienen. Das bedeutet, dass zum Einstellen oder Ändern der Wurstlänge oder Anzahl der Einzelportionen einer Wurstkette entweder Verbindungselemente an unterschiedliche Positionen zwischen erster und zweiter Scheibe angeordnet werden und/oder die Verdrängerelemente an bestehenden Verbindungselementen entsprechend angeordnet werden und / oder die der Scheiben entsprechend eingestellt wird.

Die Verbindungselemente können einen ersten Abschnitt aufweisen, der sich von einer z.B. der ersten Scheibe vorzugsweise im Wesentlichen senkrecht in Richtung zur gegenüberliegenden z.B. zweiten Scheibe erstreckt und einen zweiten Abschnitt, der sich entweder horizontal, schräg, stufenförmig oder wellenförmig zur gegenüberliegenden Scheibe zumindest bis zu einer Achse erstreckt, wo er drehbar gelagert ist, wobei vorzugsweise das entsprechende Verdrängerelement am ersten Abschnitt angeordnet ist. Durch eine schräge, stufenförmige, bzw. wellenförmige Ausbildung kann die Anzahl der Verbindungselemente auf einer Scheibe erhöht werden, da sich die Verbindungselemente bei einer Umdrehung der ersten Scheibe um die erste Achse weniger behindern können.

Gemäß einer bevorzugten Ausführungsform weist die Vorrichtung noch eine dritte Scheibe auf, die weitere Verbindungselemente, die in der zweiten und dritten Scheibe drehbar gelagert sind, aufweist, wobei mindestens eines der Verbindungselemente ein Verdrängerelement aufweist. Somit ist es möglich zwei übereinander transportierte Wurststränge zu portionieren und somit die Produktivität zu steigern. Dabei kann die zweite Scheibe über die Verbindungselemente der zweiten und dritten Scheibe gelagert sein und sich dann um die virtuelle Achse B, C drehen.

Die Erfindung betrifft auch ein Verfahren zum Einschnüren und/oder Abteilen eines sich in Transportrichtung bewegenden Wurststrangs gemäß Anspruch 16.

Gemäß einer bevorzugten Ausführungsform weist die erste und zweite Scheibe Bohrungen auf, in denen die Verbindungselemente z.B. austauschbar angeordnet werden können, wobei entweder die Bohrungen auf einem Kreis mit einem Radius r oder auf mehreren Kreisen mit unterschiedlichen Radien r angeordnet sind. Dann kann in Abhängigkeit der Portionslänge und/oder des Wurstkalibers und/oder der Anzahl von Einzelportionen in einer Wurstkette das entsprechende Verbindungselement in einer passenden Bohrung gelagert werden. Ändern sich die oben genannten Parameter, kann die Position, bzw. die Bohrung, in dem das entsprechende Verbindungselement gesteckt ist, geändert werden. Somit ist eine große Flexibilität und Anpassungsmöglichkeit an unterschiedliche Produkt- und Produktionsbedingungen möglich.

Die Erfindung wird nachfolgend unter Bezugnahme der folgenden Figuren näher erläutert.
Figur 1 zeigt schematisch einen Schnitt durch eine Vorrichtung gemäß einem Ausführungsbeispiel der vorliegenden Erfindung.
Figur 2 zeigt schematisch eine perspektivische Darstellung eines weiteren Ausführungsbeispiels gemäß der vorliegenden Erfindung.
Figur 3a zeigt das in Figur 2 gezeigte Ausführungsbeispiel in einer anderen Perspektive mit geöffneten Verdrängerelementen.
Figur 3b zeigt das in Figur 3a gezeigte Ausführungsbeispiel mit sich schließenden Verdrängerelementen.
Figur 3c zeigt das in Figur 3a, 3b gezeigte Ausführungsbeispiel mit geschlossenen Verdrängerelementen.
Figur 4 zeigt ein Ausführungsbeispiel in perspektivischer Darstellung mit Transporteinrichtung.
Figur 5 zeigt ein weiteres Ausführungsbeispiel mit einer Vielzahl von Verdrängerelementen.
Figur 6 zeigt schematisch eine Ansicht einer Scheibe mit mehreren Bohrungen auf Kreisen mit unterschiedlichem Durchmesser.
Figur 7 zeigt schematisch eine perspektivische Darstellung eines weiteren Ausführungsbeispiels.
Figur 8 zeigt eine Abteileinrichtung des in Figur 7 gezeigten Ausführungsbeispiels in einer anderen Perspektive.
Figur 9 zeigt perspektivisch das in Figur 7 gezeigte Ausführungsbeispiel bei dem sich die Scheiben weitergedreht haben.
Figur 10a und b zeigen eine weitere Ausführungsform gemäß der vorliegenden Erfindung mit drei Scheiben.

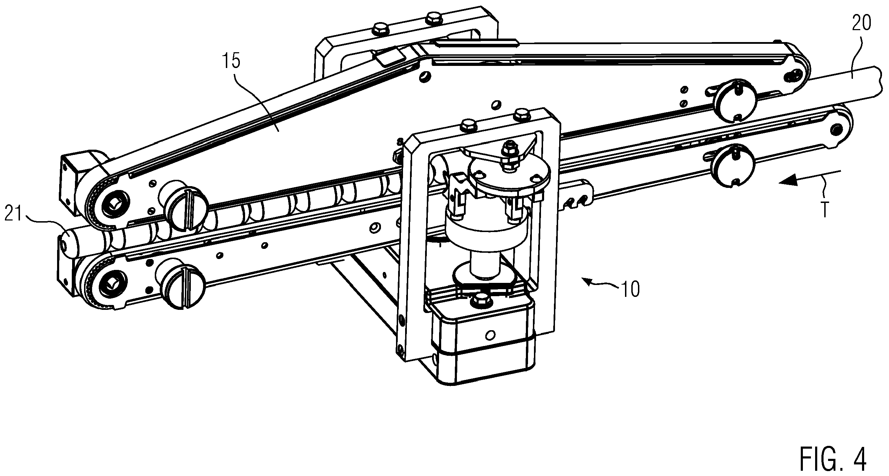

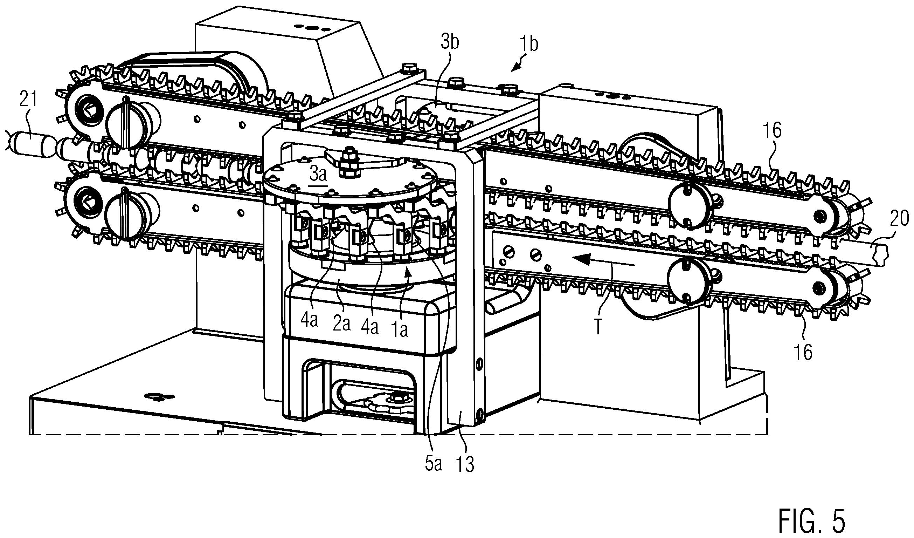

Figur 4 zeigt eine Vorrichtung 10 zum Einschnüren und / oder Abteilen eines Wurststrangs mit einer Transporteinrichtung 15 für den Wurststrang 20. Die Vorrichtung 10 unterteilt den Wurststrang in Einzelportionen 21 oder Wurstketten. Die Transporteinrichtung 15 umfasst hier z.B. zwei umlaufende Transportmittel z.B. Transportbänder oder Ketten, wobei das obere Transportmittel z.B. in regelmäßigen Abständen quer zur Transportrichtung T verlaufende und voneinander beabstandete Stege bzw. Rippen 16 aufweisen kann, zwischen denen dann die Verdrängerelemente von beiden Seiten in den Wurststrang eingreifen können, wie z.B. in der Fig.5 gezeigt ist. Die Stege ragen von der Oberfläche des Transportmittels heraus. Auch das untere umlaufende Band kann entsprechende Stege bzw. Rippen 16 aufweisen und/oder eine im Querschnitt im Wesentlichen konkave Form aufweisen, derart, dass der Wurststrang nicht seitlich vom Band rollen kann wie in der Figur 5 dargestellt ist. Die Verdrängerelemente können zwischen den Stegen eintauchen derart, dass die Verdrängerelemente 5 in den Wurststrang eingreifen können.

In Figur 4 kann das untere Transportband z.B. quer zur Transportrichtung konkav geformt sein, derart, dass die Wurst nicht vom Band rollen kann, d.h. an die Form der Wurst angepasst ist. Vor der Vorrichtung 10 befindet sich z.B. optional ein sog. Wurstanheber, der den Wurststrang wie bei einer Schanze vom Transportband abhebt, sodass die Verdrängerelemente den Wurststrang untergreifen können (nicht dargestellt).

Das obere Transportband kann mit zusätzlichen Umlenkrollen bogenförmig über die Verdrängerelemente umgelenkt werden. So kann also auch Platz für die Verdrängerelemente geschaffen werden.

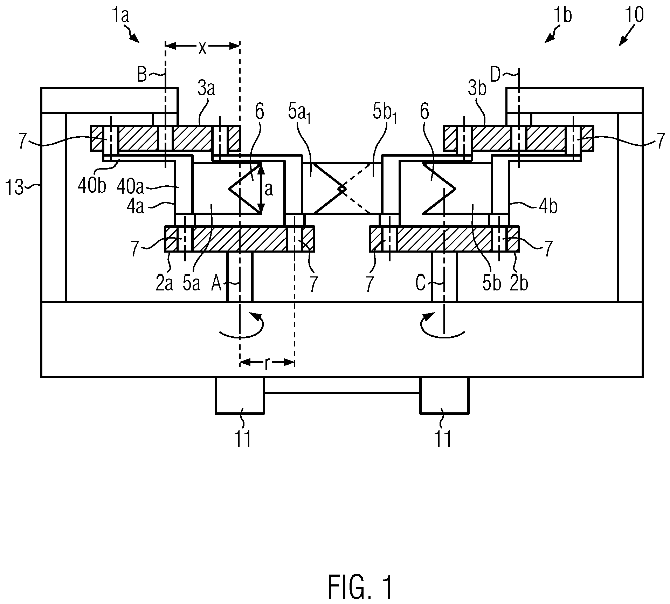

Die Konstruktion könnte auch dergestalt sein, dass die Verdrängerelemente in Transportrichtung hinter den Transportbändern angeordnet sind. Somit entfällt die Kollisionsproblematik. Figur 1 zeigt eine mögliche Ausführungsform einer Vorrichtung zum Einschnüren und/oder Abteilen eines sich in Transportrichtung T bewegenden Wurststrangs. Die Vorrichtung weist zwei in Bezug auf den in Figur 1 nicht dargestellten Wurststrang 20 gegenüberliegende Abteileinrichtungen 1a, 1b auf.

Die Abteileinrichtungen 1a, 1b weisen, wie aus Figur 1 hervorgeht, jeweils eine erste Scheibe 2a, 2b auf, die um eine erste Achse A, bzw. C drehbar gelagert ist. Die ersten Scheiben können dabei von einem Antriebsmechanismus 11 synchron gegenläufig angetrieben werden. Die Kopplung der Achsen A und C kann beispielsweise bei einem Antrieb, z.B. einem Motor über ein mechanisches Getriebe erfolgen, z.B. Zahnräder, Zahnriemen, etc., oder ein elektronisches Getriebe, indem beispielsweise zwei Motoren verwendet werden.

Die Vorrichtung weist neben den ersten Scheiben 2a, 2b auch zwei darüber liegende, versetzt angeordnete zweite Scheiben 3a, 3b auf, die parallel zu den ersten Scheiben angeordnet sind und deren Drehachsen B, D um einen Achsabstand x beabstandet sind. Die zweiten Scheiben 3a, 3b sind über mehrere Verbindungselemente 4a, 4b mit der ersten Scheibe S1 verbunden.

Die zweiten Scheiben 2a, 2b sind frei drehbar um die Achse B, D gelagert und werden über die Verbindungselemente 4a, 4b angetrieben.

Es wäre aber auch möglich, dass die zweiten Scheiben angetrieben werden und die Drehbewegung auf die ersten Scheiben übertragen wird. Eine Kopplung der Scheiben der ersten und zweiten Abteileinrichtung wäre auch möglich, wenn die zweiten Scheiben beide nach innen versetzt wären und dann verzahnt ineinandergreifen.

Wesentlich dabei ist lediglich, dass ein Antriebsmechanismus vorgesehen ist, derart, dass sich alle Scheiben mit gleicher Drehzahl drehen und die entsprechenden Scheiben der gegenüberliegenden Abteileinrichtungen sich gegenläufig drehen.

Ein erster Endbereich des Verbindungselements 4a, 4b ist in einer Bohrung 7 um eine Achse drehbar gelagert, die mit einem Abstand r zur ersten Achse A beabstandet ist und parallel zu dieser verläuft. Der obere Endbereich des Verbindungselements 4a ist ebenfalls in einer Bohrung 7 drehbar um eine Achse gelagert, die um den gleichen Abstand r zur Mittelachse B der zweiten Scheibe 3a, 3b beabstandet ist. In Figur 1 sind jeweils zwei Verbindungselemente pro Abteileinrichtung 1a, 1b gezeigt. Die oberen Scheiben 3a, 3b werden mittels Halterung 13 aufgehängt. An mindestens einem Verbindungselement 4a, 4b einer jeden Abteileinrichtung 1a, 1b ist ein Verdrängerelement 5a, 5b angeordnet. Das jeweilige Verdrängerelement 5a, 5b weist an seinem dem Wurststrang 20 zugewandten Ende eine Aussparung 6, hier eine V-förmige Aussparung, auf. Die Abmessung a der Aussparung 6 nimmt in einer Richtung, die vom Wurststrang 20 weg weist, ab. Die in Figur 1 im Schnitt dargestellte Vorrichtung kann noch ein drittes oder mehr Verbindungselemente 4a, 4b aufweisen, das entsprechend angeordnet ist. Bei dem in Figur 1 gezeigten Ausführungsbeispiel ist der Abstand r für alle dargestellten Verbindungselemente gleich.

Während es wesentlich ist, dass für ein Verbindungselement der Abstand r für die obere und untere Scheibe 2a, 2b, 3a, 3b gleich ist, kann der Abstand r für die unterschiedlichen Verbindungselemente 4a, 4b auch unterschiedlich sein, wie nachfolgend noch näher erläutert wird. Die zuvor beschriebene Parallelkurbelführung ermöglicht, dass die Verbindungselemente 4a, 4b derart geführt werden, dass das mindestens eine Verdrängerelement 5a, 5b während seiner Rotation um die erste Achse A, C stets unter einem vorbestimmten Winkel, vorzugsweise 90° zur Transportrichtung T des Wurststrangs 20 ausgerichtet bleibt. Die Abteileinrichtungen 1a, 1b sind symmetrisch zueinander aufgebaut.

Das in Figur 1 gezeigte Verdrängerelement 5a₁, das hier plattenförmig ausgebildet ist und das Verdrängerelement 5b₁, das ebenfalls plattenförmig ausgebildet ist, werden durch Drehung um die Achsen A und C soweit aufeinander zu bewegt, dass die Platten entsprechend überlappen und z.B. nur noch eine Öffnung 14 der Aussparungen 6 offenbleibt, derart, dass der Wurststrang eingeschnürt wird. Ragen die Verdrängerelemente 5a₁, 5b₁ so weit nach vorne zur gegenüberliegenden Abteileinrichtung, dass keine Öffnung 14 mehr bleibt und die Verdrängerelemente vollständig überlappen, wird der Wurststrang vollständig durchtrennt, d.h. abgeschnitten.

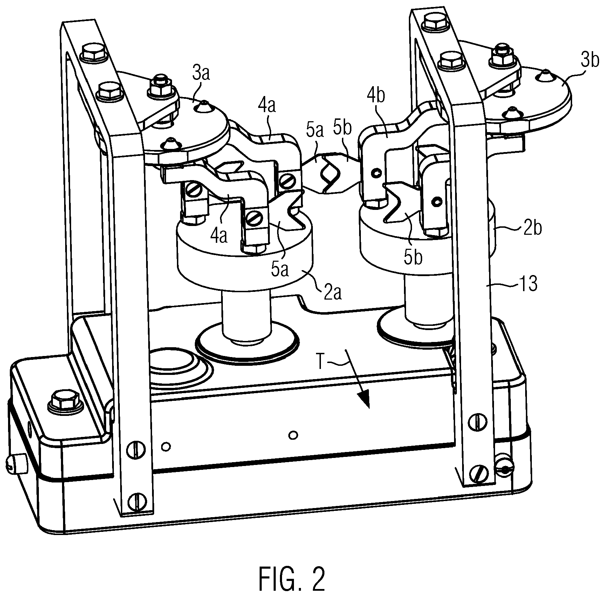

Figur 2 zeigt ein Ausführungsbeispiel, das im Wesentlichen dem in Fig. 1 gezeigten Ausführungsbeispiel entspricht, mit Abteileinrichtungen 1a, 1b mit je drei Verbindungselementen 4a, 4b, von denen ein jedes ein Verdrängerelement 5a, 5b aufweist. Wie aus Figur 2 zu erkennen ist, bleiben die Verdrängerelemente 5a, 5b während ihres Umlaufs um die Achsen A, C stets senkrecht zum Wurststrang, der hier nicht dargestellt ist, ausgerichtet.

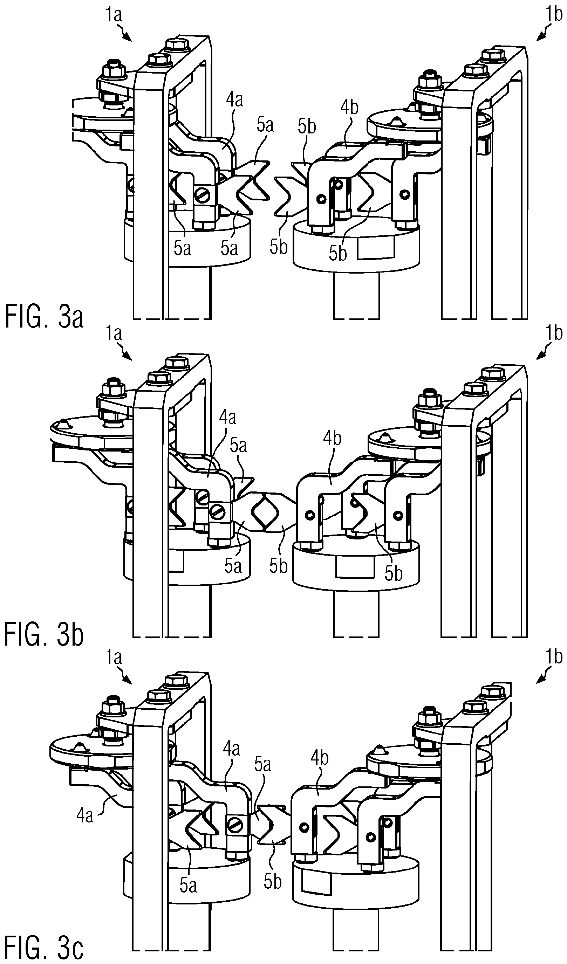

Das in den Figuren 3a-3c dargestellte Ausführungsbeispiel entspricht dem in Figuren 1 und 2 gezeigten Ausführungsbeispiel mit der Ausnahme, dass die Verdrängerelemente soweit aufeinander zu bewegbar sind, d.h. soweit in den Wurststrang eintauchen können, dass der Wurststrang in Einzelwürste unterteilt werden kann. Figur 3a zeigt die drei senkrecht zur Transportrichtung T ausgerichteten Verdrängerelemente, die hier die Funktion von Abteil-, d.h. Schneidelementen haben, in einer Position, in der der Wurststrang frei durch die Öffnung zwischen den gegenüberliegenden Verdrängerelementen 5a, 5b transportiert werden kann. Drehen sich die Scheiben 2a, 2b, 3a, 3b weiter, so beginnen sich, wie in Figur 3b dargestellt ist, die Abteilelemente 5a, 5b aufeinander zuzubewegen, bis sie, wie in Figur 3c dargestellt ist, vollkommen überlappen, bis keine Öffnung 14 zwischen den Verdrängerelementen 5a, 5b mehr vorgesehen ist und der Wurststrang vollständig durchtrennt wird. Drehen sich die Scheiben weiter, bewegen sich die entsprechenden Verdrängerelemente wieder auseinander, bis die nachfolgenden Verdrängerelemente vollständig überlappen und den Wurststrang zum Abteilen der nächsten Wurstportion abteilen.

Wie insbesondere aus den Figuren 1-3c hervorgeht, sind die Verbindungselemente und Verdrängerelemente derart ausgebildet und positioniert, dass sie sich bei einer vollständigen Umdrehung der Scheiben 2a, 2b, 3a, 3b aneinander vorbei bewegen, ohne aneinander zu stoßen. Der Achsversatz der Schwenklager in der oberen und unteren Scheibe benachbarter Verbindungselemente entspricht z.B. ebenfalls dem Versatz x der Achsen A und C bzw. C und D. Es sollte der Abstand der Drehlager von benachbarten Verbindungselementen (hier Sehnenlänge) vorzugsweise größer sein als die Erstreckung eines Verbindungselements einschließlich Verdrängerelements, plus Freiraum. D.h., dass fluchtend angeordnete Verbindungselemente mit jeweiligem Verdrängerelement beabstandet sind.

Insbesondere haben die Verdrängerelemente auch eine geringere Höhe als ein erster Abschnitt 40a der Verbindungselemente 4a, 4b, der sich in Vertikalrichtung nach oben erstreckt.

In Figur 1 ist das Verbindungselement beispielsweise L-förmig ausgebildet, weist hier also einen ersten Abschnitt 40a auf, der sich von der ersten Scheibe 2a, 2b senkrecht in Richtung zur zweiten Scheibe 3a, 3b nach oben erstreckt und einen zweiten Abschnitt 40b, der sich hier horizontal und parallel zur zweiten Scheibe 3a, 3b erstreckt und zwar zumindest bis zu der Achse, um die das Verbindungselement drehbar gelagert ist. Das Verdrängerelement ist am ersten Abschnitt 40a angeordnet. Es ist aber auch möglich, dass der zweite Abschnitt 40b schräg, stufen- oder wellenförmig ausgebildet ist. Eine wellenförmige Ausbildung ist beispielsweise in den Figuren 2-3c gezeigt. Über eine schräge, stufen- oder wellenförmige Anordnung kann der Abstand zwischen den Verbindungselementen minimiert werden.

Figur 5 zeigt eine weitere Ausführungsform gemäß der vorliegenden Erfindung, die den zuvor gezeigten Ausführungsbeispielen entspricht, wobei hier jedoch mehr als drei Verbindungselemente angeordnet sind. In diesem Fall sind z.B. 10 Verbindungselemente 4a,4b mit jeweiligen Verdrängerelementen 5a, 5b vorgesehen. Die Verdrängerelemente sind hier so positioniert und ausgebildet, dass sie z.B. den Wurststrang in Einzelwürste abteilen, d.h. abscheren. Gleichermaßen könnten die Verdrängerelemente auch so wie zuvor beschrieben wurde, ausgebildet sein, dass sie den Wurststrang nur einschnüren, um eine zusammenhängende Wurstkette aus Einzelwürsten zu erzeugen.

Gleichzeitig kann, wie auch bei den vorherigen Ausführungsbeispielen möglich ist, ein Teil der Verdrängerelemente zum Einschnüren dienen und zumindest eines zum Abteilen, bzw. Abschneiden, derart, dass Wurstketten einer bestimmten Länge erzeugt werden können.

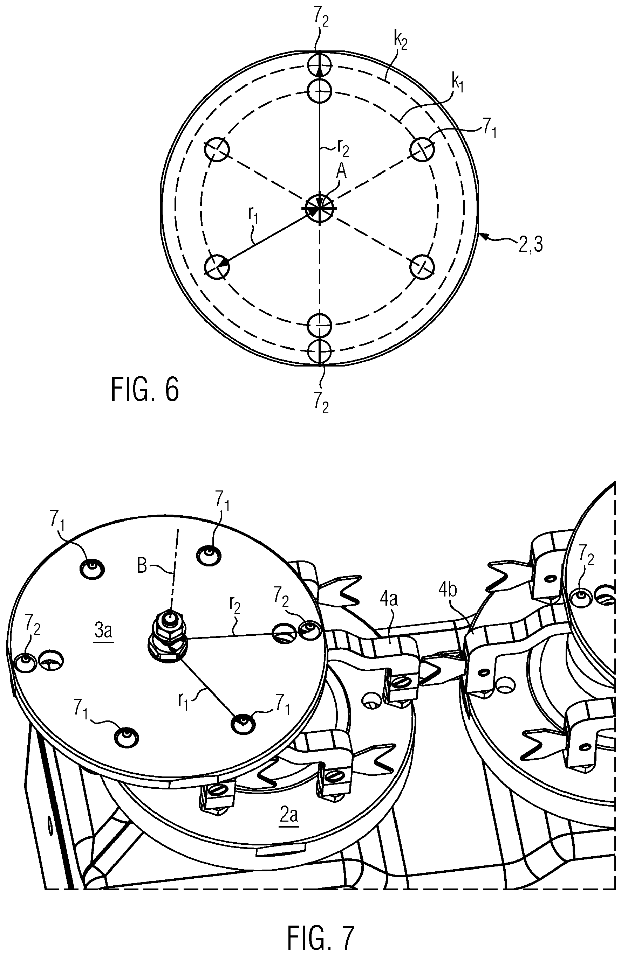

Figur 6 zeigt schematisch eine Ansicht der ersten oder zweiten Scheibe 2,3. Die entsprechende Scheibe 2, 3 weist an ihrer Innenseite eine Vielzahl von Bohrungen 7 auf, wobei die Bohrungen 7₁ auf einem Kreis k1 mit dem Radius r1 angeordnet sind. Zusätzlich kann noch eine oder mehrere Bohrungen 7₂ auf mindestens einem weiteren Kreis k2 mit einem Radius r2 (oder bei n Kreisen einem Radius rₙ, wobei n ∈ N) angeordnet sein. Eine entsprechend ausgebildete Scheibe bringt eine große Anpassungsmöglichkeit für unterschiedliche Anwendungen und Wurstlängen mit sich. So können die Bohrungen 7 entsprechend einer gewünschten Wurstlänge mit Verbindungselementen 4a, 4b bestückt werden. Bestückt man beispielsweise nur jede zweite Bohrung 7₁, so weist eine entsprechende Wurstportion dann bei gleicher Drehzahl ungefähr die doppelte Länge auf. Bohrungen 7₂ auf dem zweiten Kreis k₂ können beispielsweise für Verbindungselemente 4a, 4b mit Verdrängerelementen 5a, 5b zum Abteilen, d.h. Durchtrennen des Wurststrangs dienen, da dann die Verdrängerelemente entsprechend weiter in den Wurststrang hineinragen. Würden nun bei dem in Figur 6 gezeigten Ausführungsbeispiel die Bohrungen 7₂ (in einer 0°- und 180°-Position) auf dem äußeren Kreis k2 mit Verbindungselementen bestückt werden und die restlichen Bohrungen auf dem Kreis k1 mit kleinerem Radius r₁, so könnten die Verdrängerelemente an den Verbindungselementen in den Öffnungen 7₂ als Verdrängerelemente zum Abschneiden dienen, während die anderen Verdrängerelemente nur einschnüren. So könnten dann z.B. mit einer entsprechenden Anordnung Wurstketten mit vier Einzelwürsten erzeugt werden.

Figur 7 zeigt ein weiteres Ausführungsbeispiel, das im Wesentlichen den vorherigen Ausführungsbeispielen entspricht. Auch hier sind, wie die Aufsicht auf die obere zweite Scheibe 3a zeigt, mehrere Bohrungen 7₁ auf einem inneren Kreis k1 vorgesehen und eine zusätzliche Bohrung 7₂ mit größerem Radius r2.

Hier sind beispielsweise in den vierinneren Bohrungen Verbindungselemente drehbar gelagert und zwei Verbindungselemente in der äußeren Bohrungen 7₂. Die erste Scheibe 2a ist entsprechend bestückt. Die gegenüberliegende Abteileinrichtung 1b kann entsprechend ausgebildet sein.

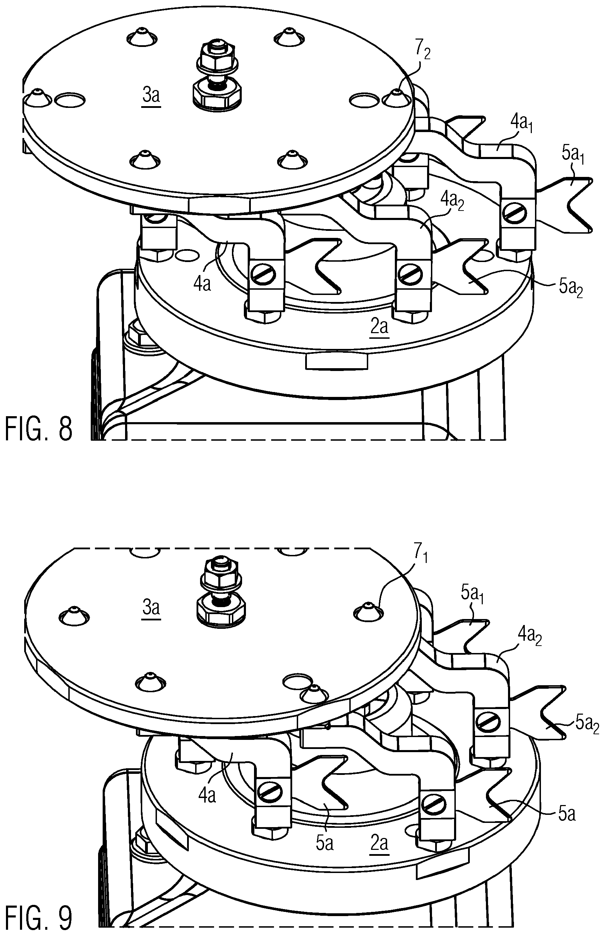

Figur 8 zeigt die in Fig. 7 gezeigte Anordnung in einer anderen Perspektive wobei zwei aufeinander folgende Verbindungselemente 4a1, 4a₂ mit Verdrängerelementen 5a₁, 5a₂ dargestellt sind und wobei das linke Verbindungselement 4a₂ auf einem Kreis mit Radius r1 angeordnet ist und das rechte Verbindungselement 4a₂ in einer Bohrung 7₂ auf einem Kreis mit Radius r2. Das Verdrängerelement 5a₁ ragt so weit in Richtung zur gegenüberliegenden Abteileinrichtung, dass ein Abteilen möglich ist.

In Figur 9 haben sich die Scheiben 2,3 bereits weitergedreht, derart, dass jetzt das nachfolgende Verdrängerelement 5a₂ in einer Einschnürposition ist. Wie deutlich zu erkennen ist, ragt in Figur 8 das Verbindungselement 4a₁ mit dem entsprechenden Verdrängerelement 5a₁ weiter in Richtung Wurststrang als das Verbindungselement 4a₂ mit dem Verdrängerelement 5a₂ in Figur 9. Dies macht deutlich, dass die Verdrängerelemente, deren Verbindungselemente in Radialrichtung weiter außen gelagert sind beispielsweise zum Abteilen verwendet werden können, während die weiter innen angeordneten Verbindungselemente zum Einschnüren verwendet werden können.

Somit erlaubt die vorliegende Erfindung neben einer hohen möglichen Portionsleistung auch noch die Möglichkeit, die Anlage ohne großes Umrüsten an ein gewünschtes Produkt anzupassen. Wie bereits beschrieben, kann durch die Position des Verbindungselements bestimmt werden, wie weit das Verdrängerelement in den Wurststrang hineinragt. Gleichermaßen kann aber auch durch die Form des Verdrängerelements eingestellt werden, ob und wie weit ein Wurststrang eingeschnürt oder abgeteilt wird. Dazu ist es auch möglich, die Verdrängerelemente abnehmbar und somit auch austauschbar an den Verbindungselementen zu befestigen.

Die Vorrichtung weist auch eine Steuereinrichtung auf, die den mindestens einen Antrieb derart ansteuert, dass die ersten Scheiben 2a, 2b mit konstanter oder mit variabler Drehzahl angetrieben werden. Somit kann beispielsweise auch ein bestimmtes Geschwindigkeitsprofil durchlaufen werden, derart, dass sich z.B. die Geschwindigkeit eines Verdrängerelements in Abhängigkeit seiner Umlaufposition ändert, insbesondere die Geschwindigkeitskomponente in Transportrichtung beim Einschnüren oder durch Trennen an die Geschwindigkeit des Wurststrangs angepasst werden kann. Vorteilhafterweise entspricht die Geschwindigkeitskomponente des jeweiligen Verdrängerelements in Transportrichtung T beim Einschnüren und/oder Abteilen im Wesentlichen der Geschwindigkeit einer Transporteinrichtung 15 zum Transportieren des Wurststrangs 20. Somit kann ein besonders zuverlässiges und schonendes Einschnüren oder Abteilen realisiert werden.

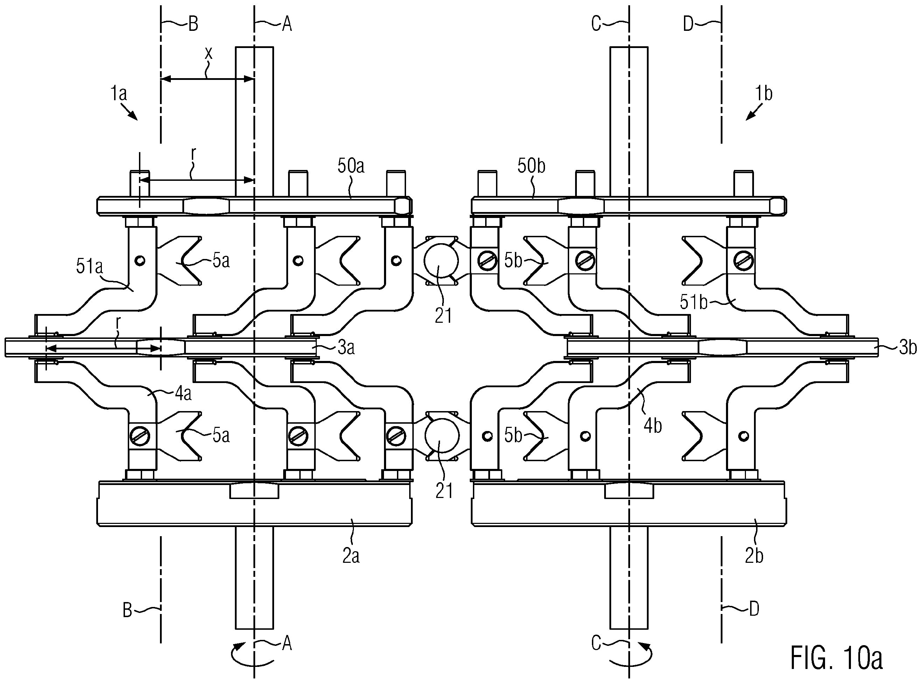

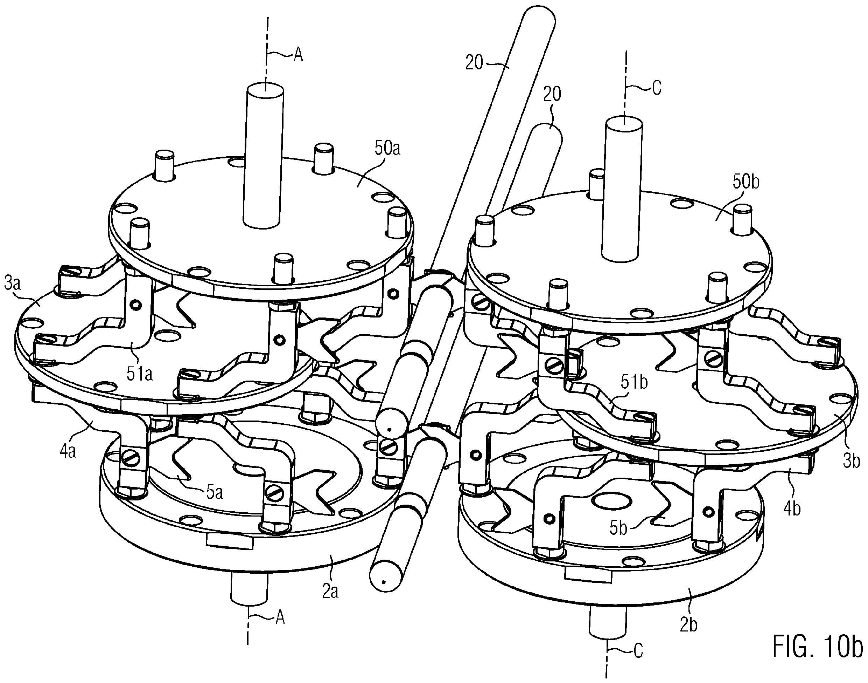

Es ist auch möglich, dass die Vorrichtung, wie aus Figuren 10a und 10b hervorgeht, noch eine dritte Scheibe 50a, 50b aufweist, die über weitere Verbindungselemente 51 a,51b, die in der zweiten und dritten Scheibe drehbar gelagert sind, aufweist, wobei mindestens eines der Verbindungselemente ein Verdrängerelement aufweist.

Figur 10a zeigt eine Ansicht in Transportrichtung auf dieses weitere Ausführungsbeispiel, während Figur 10b eine perspektivische Darstellung zeigt. Dieses Ausführungsbeispiel funktioniert nach dem Prinzip einer Parallelkurbelkupplung. Auch hier ist wieder z.B. die erste Scheibe einer jeden Abteileinrichtung 1a, 1b über einen hier nicht dargestellten Antrieb angetrieben und die erste Scheibe 2a ist jeweils mittels den Verbindungselementen 4a, 4b mit der zweiten Scheibe 3a, 3b verbunden. Die Scheibe 3a, 3b ist wiederum über weitere Verbindungselemente 51a, 51b mit einer dritten Scheibe 50a, 50b verbunden, die ebenfalls drehbar um eine Achse hier z.B. die Achse A gelagert ist. Dies muss nicht zwingend die Achse A sein, sie kann auch seitlich versetzt sein (wie weiter unten beschrieben). Auch die Lagerung der Verbindungselemente 4a und 51a müssen nicht fluchten. Es ist sogar für den Rundlauf besser, wenn diese um einen Winkel versetzt zueinander in der Scheibe 3a gelagert sind.

Auch hier gilt, dass das jeweilige Verbindungselement in der ersten Scheibe 2a, 2b mit einem jeweiligen Abstand r zur ersten Achse A, C und in der zweiten Scheibe 3a, 3b mit dem gleichen Abstand r zur zweiten Achse drehbar gelagert ist. Auch in der dritten Scheibe 50a, 50b sind die Verbindungselemente 51a, 51b mit dem entsprechenden Abstand r zur Drehachse der dritten Scheibe 50a drehbar gelagert. Im Gegensatz zu den vorherigen Beispielen ist die zweite Scheibe 3a, 3b nicht in der zweiten Achse B drehbar gelagert, sondern über die Verbindungselemente 4a, 4b, bzw. 51a, 51b. Die drehende Scheibe 2a überträgt über die Verbindungselemente 4a, 4b ein Drehmoment auf die zweite Scheibe 3a, 3b derart, dass es sich um die "virtuelle Achse" B dreht. Die dritte Scheibe 50a, 50b kann, wie in Figuren 10a und 10b dargestellt ist, über eine Halterung drehbar gelagert sein. Die Verbindungselemente 51a,51b überragen ein Drehmoment auf die dritte Scheibe 50a,50b. Bei den in Figuren 10a und 10b gezeigten Ausführungsbeispielen entspricht die Drehachse der dritten Scheibe 50a der Drehachse A der ersten Scheibe 2a. Es ist auch möglich, dass die Drehachse der dritten Scheibe 50a, 50b versetzt ist zur Drehachse der ersten Scheibe 2a, wobei dann die Geometrie der Verbindungselemente 51a, 51b und /oder der Verdrängerelemente entsprechend angepasst werden muss, damit die Verdrängerelemente in den Wurststrang zum Einschnüren und/oder Abteilen eingreifen können.

Gleichermaßen gilt auch hier z.B., dass dann der Abstand der Drehachse der obersten Scheibe 50a, 50b von der Drehachse der Verbindungselemente 51a, 51b ebenfalls wieder um den gleichen Radius r beabstandet ist wie der Abstand r zwischen der Drehachse B, D der zweiten Scheibe und der Position, an der das jeweilige Verbindungselement drehbar gelagert ist. Wie auch in Zusammenhang mit den vorherigen Ausführungsbeispielen beschrieben, kann jedoch der Abstand r für unterschiedliche Verbindungselemente unterschiedlich gewählt werden, es ist dann lediglich notwendig, dass ein Verbindungselement mit jeweils gleichem Abstand r zur Drehachse der jeweiligen Scheiben, zwischen denen es liegt, angeordnet ist.

Bei einem nicht dargestellten Ausführungsbeispiel hat das Verbindungselement eine so große Erstreckung in Vertikalrichtung, dass beispielsweise zwei Verdrängerelemente 5a, 5b in Vertikalrichtung übereinander angeordnet werden können, sodass ebenfalls beispielsweise zwei Wurststränge übereinander abgeteilt werden können.

Bei dem erfindungsgemäßen Verfahren zum Einschnüren und/oder Abteilen eines sich in Transportrichtung T bewegenden Wurststrangs 20 wird eine Vorrichtung gemäß den vorherigen Ausführungsbeispielen verwendet, wobei die Verbindungselemente 4a,4b drehbar zwischen der ersten und zweiten Scheibe 2a,2b,3a, 3b gelagert werden und bei Rotation der ersten Scheibe 2a,2b um die erste Achse A derart geführt werden, dass das mindestens eine Verdrängerelement 5a,5b während seines Umlaufs um die erste Achse A stets unter einem vorbestimmten Winkel, insbesondere 90° zur Transportrichtung T, ausgerichtet wird.

Wie beschrieben können die Scheiben Bohrungen 7 aufweisen, in denen die Verbindungselemente drehbar gelagert sind und die Bohrungen entweder auf der ersten und zweiten Scheibe 2a,2b,3a,3b auf einem Kreis mit einem Radius r oder auf mehreren Kreisen mit unterschiedlichen Radien angeordnet sind und die Verbindungselemente 5a,5b in Abhängigkeit der Portionslänge und/oder des Wurstkalibers und/oder der Anzahl von Einzelportionen in einer Wurstkette in entsprechenden Bohrungen 7 gelagert werden und insbesondere die Position der Verbindungselemente (5a,5b) bei sich änderndem Wurstkaliber und/oder der Portionslänge und/oder Anzahl von Einzelportionen in einer Wurstkette entsprechend geändert wird.

## Patentansprüche

1. Vorrichtung (10) zum Einschnüren und/oder Abteilen eines sich in Transportrichtung (T) bewegenden Wurststrangs (20) mit zwei in Bezug auf den Wurststrang (20) gegenüberliegenden Abteileinrichtungen (1a, 1b), die jeweils umfassen:
- eine um eine erste Achse (A, C) drehbar gelagerte erste Scheibe (2a, 2b),
- eine in Vertikalrichtung beabstandet angeordnete, um eine zweite Achse (B, D) mit einem Achsabstand (x) zu der ersten Achse (A, C) drehbaren zweiten Scheibe (3a, 3b),
- mindestens zwei Verbindungselemente (4a,4b) zwischen der ersten und zweiten Scheibe (2a,2b,3a,3b), von denen zumindest eines ein Verdrängerelement (5a, 5b) aufweist,
wobei die Verbindungselemente (4a, 4b) in der ersten Scheibe (2a, 2b) und in der zweiten Scheibe (3a, 3b) drehbar gelagert sind, wodurch die Verbindungselemente (4a, 4b) derart geführt werden, dass das mindestens eine Verdrängerelement (5a, 5b) während seines Umlaufs um die erste Achse (A, C) stets unter einem vorbestimmten Winkel, insbesondere 90° zur Transportrichtung (T), ausgerichtet ist.

2. Vorrichtung nach Anspruch 1, **dadurch gekennzeichnet, dass** das jeweilige Verbindungselement (4a, 4b) in der ersten Scheibe (2a, 2b) mit einem jeweiligen Abstand (r) zur ersten Achse (A, C) und in der zweiten Scheibe (3a, 3b) mit dem gleichen Abstand (r) zur zweiten Achse (B, D) drehbar gelagert ist und insbesondere der Abstand (r) für unterschiedliche Verbindungselemente (4a, 4b) gleich oder unterschiedlich ist.

3. Vorrichtung nach Anspruch 1 oder 2, **dadurch gekennzeichnet, dass** die Verdrängerelemente (5a, 5b) der gegenüberliegenden Abteileinrichtungen (1a, 1b) soweit aufeinander zu bewegbar sind, dass sie den Wurststrang (20) einschnüren und/oder abtrennen.

4. Vorrichtung nach mindestens einem der Ansprüche 1-3, **dadurch gekennzeichnet, dass** die Verdrängerelemente (5a, 5b) insbesondere plattenförmig ausgebildet sind und eine Aussparung (6) aufweisen, deren Abmessung (a) von der dem Wurststrang (20) zugewandten Seite weg abnimmt.

5. Vorrichtung nach mindestens einem der vorhergehenden Ansprüche, **dadurch gekennzeichnet, dass** eine Abteileinrichtung (1a, 1b) mindestens zwei Verbindungselemente, vorzugsweise drei Verbindungselemente und mindestens ein Verdrängerelement (5a, 5b), vorzugsweise mindestens 3 Verdrängerelemente aufweist.

6. Vorrichtung nach mindestens einem der vorhergehenden Ansprüche, **dadurch gekennzeichnet, dass** die Verbindungselemente (4a, 4b) in Bohrungen (7) in der ersten (2a, 2b) und zweiten (3a, 3b) Scheibe drehbar gelagert sind und insbesondere austauschbar angeordnet sind.

7. Vorrichtung nach Anspruch 6, **dadurch gekennzeichnet, dass** die Bohrungen (7) auf der ersten und zweiten Scheibe (2a, 2b), (3a, 3b) entweder auf einem Kreis mit Radius (r) oder auf mehreren Kreisen mit unterschiedlichen Radien (r) angeordnet sind.

8. Vorrichtung nach mindestens einem der Ansprüche 1-7, **dadurch gekennzeichnet, dass** ein oder mehrere Verdrängerelemente (5a, 5b) zum Einschnüren dienen und mindestens ein Verdrängerelement (5a, 5b) zum Abteilen.

9. Vorrichtung nach mindestens einem der Ansprüche 1-8, **dadurch gekennzeichnet, dass** die Vorrichtung einen Antriebsmechanismus (11) aufweist, über den vorzugsweise die ersten Scheiben (2a, 2b) angetrieben werden, wobei die Drehzahl aller Scheiben (2a, 2b) gleich ist.

10. Vorrichtung nach Anspruch 9, **dadurch gekennzeichnet, dass** die Vorrichtung eine Steuereinrichtung umfasst, die einen Antrieb derart ansteuert, dass die Scheiben (2a, 2b) mit konstanter oder mit variabler Drehzahl angetrieben werden.

11. Vorrichtung nach mindestens einem der Ansprüche 1-10, **dadurch gekennzeichnet, dass** die Geschwindigkeitskomponente des jeweiligen Verdrängerelements (5a, 5b) in Transportrichtung (T) beim Einschnüren und/oder Abteilen im Wesentlichen der Geschwindigkeit einer Transporteinrichtung (15) zum Transportieren des Wurststrangs entspricht oder
die Geschwindigkeit des jeweiligen Verdrängerelements (5a,5b) beim Einschnüren und/oder Abteilen größer ist als die Geschwindigkeit der Transporteinrichtung oder
das Verdrängerelemente (5a,5b) gestoppt werden, wenn die Verdrängerelemente gerade nicht Einschnüren und/oder Abteilen, so dass beliebig lange Portionen herstellbar sind.

12. Vorrichtung nach mindestens einem der Ansprüche 1-11, **dadurch gekennzeichnet, dass** an einem Verbindungselement (4a, 4b) mehrere Verdrängerelemente übereinander angeordnet sind.

13. Vorrichtung nach mindestens einem der Ansprüche 1 -12, **dadurch gekennzeichnet, dass** die Verdrängerelemente (5a,5b) an den Verbindungselementen (4a, 4b) abnehmbar angeordnet sind.

14. Vorrichtung nach mindestens einem der Ansprüche 1-13, **dadurch gekennzeichnet, dass** die Verbindungselemente (4a, 4b) einen ersten Abschnitt (40a) aufweisen, der sich von einer Scheibe (2a, 2b) im Wesentlichen senkrecht in Richtung zur gegenüberliegenden Scheibe (3a,3b) erstreckt und einen zweiten Abschnitt (40b), der sich entweder horizontal, schräg, stufenförmig oder wellenförmig zur gegenüberliegenden Scheibe (3a, 3b) zumindest bis in einen Bereich der Achse erstreckt, um die der Abschnitt drehbar gelagert ist, wobei vorzugsweise der erste Abschnitt das Verdrängerelement (5a, 5b) aufweist.

15. Vorrichtung nach mindestens einem der Ansprüche 1-14, **dadurch gekennzeichnet, dass** die Vorrichtung noch eine dritte Scheibe (50a, 50b) und weitere Verbindungselemente (51a,51b), die in der zweiten und dritten Scheibe drehbar gelagert sind, aufweist, wobei mindestens eines der Verbindungselemente ein Verdrängerelement (5a, 5b) aufweist und die zweite Scheibe (3a,3b) vorzugsweise über die Verbindungselemente (4a, 4b) der ersten und dritten Scheibe drehbar um die zweite Achse (B) gelagert ist.

16. Verfahren zum Einschnüren und/oder Abteilen eines sich in Transportrichtung (T) bewegenden Wurststrangs (20), mit einer Vorrichtung nach mindestens Anspruch 1, wobei die Verbindungselemente (4a,4b) drehbar zwischen der ersten und zweiten Scheibe (2a,2b,3a, 3b) gelagert werden und bei Rotation der ersten Scheibe (2a,2b) um die erste Achse (A) derart geführt werden, dass das mindestens eine Verdrängerelement (5a,5b) während seines Umlaufs um die erste Achse (A) stets unter einem vorbestimmten Winkel, insbesondere 90° zur Transportrichtung (T), ausgerichtet wird.

17. Verfahren nach Anspruch 16, **dadurch gekennzeichnet, dass** die Scheiben Bohrungen (7) aufweisen, in denen die Verbindungselemente drehbar gelagert sind und die Bohrungen (7) entweder auf der ersten und zweiten Scheibe (2a,2b,3a,3b) auf einem Kreis mit einem Radius (r) oder auf mehreren Kreisen mit unterschiedlichen Radien angeordnet sind und die Verbindungselemente (5a,5b) in Abhängigkeit der Portionslänge und/oder des Wurstkalibers und/oder der Anzahl von Einzelportionen in einer Wurstkette in entsprechenden Bohrungen (7) gelagert werden und insbesondere die Position der Verbindungselemente (5a,5b) bei sich änderndem Wurstkaliber und/oder der Portionslänge und/oder Anzahl von Einzelportionen in einer Wurstkette entsprechend geändert wird.

## Geänderte Patentansprüche

### Geänderte Patentansprüche gemäss Regel 137(2) EPÜ.

1. Vorrichtung (10) zum Einschnüren und/oder Abteilen eines sich in Transportrichtung (T) bewegenden Wurststrangs (20) mit zwei in Bezug auf den Wurststrang (20) gegenüberliegenden Abteileinrichtungen (1a, 1b), die jeweils umfassen:
- eine um eine erste Achse (A, C) drehbar gelagerte erste Scheibe (2a, 2b),
- eine in Vertikalrichtung beabstandet angeordnete, um eine zweite Achse (B, D) mit einem Achsabstand (x) zu der ersten Achse (A, C) drehbaren zweiten Scheibe (3a, 3b),
- mindestens zwei Verbindungselemente (4a,4b) zwischen der ersten und zweiten Scheibe (2a,2b,3a,3b), von denen zumindest eines ein Verdrängerelement (5a, 5b) aufweist,
wobei die Verbindungselemente (4a, 4b) in der ersten Scheibe (2a, 2b) und in der zweiten Scheibe (3a, 3b) drehbar gelagert sind, wodurch die Verbindungselemente (4a, 4b) derart geführt werden, dass das mindestens eine Verdrängerelement (5a, 5b) während seines Umlaufs um die erste Achse (A, C) stets unter einem vorbestimmten Winkel, insbesondere 90° zur Transportrichtung (T), ausgerichtet ist, wobei das jeweilige Verbindungselement (4a, 4b) in der ersten Scheibe (2a, 2b) mit einem jeweiligen Abstand (r) zur ersten Achse (A, C) und in der zweiten Scheibe (3a, 3b) mit dem gleichen Abstand (r) zur zweiten Achse (B, D) drehbar gelagert ist und insbesondere der Abstand (r) für unterschiedliche Verbindungselemente (4a, 4b) gleich oder unterschiedlich ist.

2. Vorrichtung nach Anspruch 1, **dadurch gekennzeichnet, dass** die Verdrängerelemente (5a, 5b) der gegenüberliegenden Abteileinrichtungen (1a, 1b) soweit aufeinander zu bewegbar sind, dass sie den Wurststrang (20) einschnüren und/oder abtrennen.

3. Vorrichtung nach mindestens einem der Ansprüche 1-2, **dadurch gekennzeichnet, dass** die Verdrängerelemente (5a, 5b) insbesondere plattenförmig ausgebildet sind und eine Aussparung (6) aufweisen, deren Abmessung (a) von der dem Wurststrang (20) zugewandten Seite weg abnimmt.

4. Vorrichtung nach mindestens einem der vorhergehenden Ansprüche, **dadurch gekennzeichnet, dass** eine Abteileinrichtung (1a, 1b) mindestens zwei Verbindungselemente, vorzugsweise drei Verbindungselemente und mindestens ein Verdrängerelement (5a, 5b), vorzugsweise mindestens 3 Verdrängerelemente aufweist.

5. Vorrichtung nach mindestens einem der vorhergehenden Ansprüche, **dadurch gekennzeichnet, dass** die Verbindungselemente (4a, 4b) in Bohrungen (7) in der ersten (2a, 2b) und zweiten (3a, 3b) Scheibe drehbar gelagert sind und insbesondere austauschbar angeordnet sind.

6. Vorrichtung nach Anspruch 5, **dadurch gekennzeichnet, dass** die Bohrungen (7) auf der ersten und zweiten Scheibe (2a, 2b), (3a, 3b) entweder auf einem Kreis mit Radius (r) oder auf mehreren Kreisen mit unterschiedlichen Radien (r) angeordnet sind.

7. Vorrichtung nach mindestens einem der Ansprüche 1-6, **dadurch gekennzeichnet, dass** ein oder mehrere Verdrängerelemente (5a, 5b) zum Einschnüren dienen und mindestens ein Verdrängerelement (5a, 5b) zum Abteilen.

8. Vorrichtung nach mindestens einem der Ansprüche 1-7, **dadurch gekennzeichnet, dass** die Vorrichtung einen Antriebsmechanismus (11) aufweist, über den vorzugsweise die ersten Scheiben (2a, 2b) angetrieben werden, wobei die Drehzahl aller Scheiben (2a, 2b) gleich ist.

9. Vorrichtung nach Anspruch 8, **dadurch gekennzeichnet, dass** die Vorrichtung eine Steuereinrichtung umfasst, die einen Antrieb derart ansteuert, dass die Scheiben (2a, 2b) mit konstanter oder mit variabler Drehzahl angetrieben werden.

10. Vorrichtung nach mindestens einem der Ansprüche 1-9, **dadurch gekennzeichnet, dass** die Geschwindigkeitskomponente des jeweiligen Verdrängerelements (5a, 5b) in Transportrichtung (T) beim Einschnüren und/oder Abteilen im Wesentlichen der Geschwindigkeit einer Transporteinrichtung (15) zum Transportieren des Wurststrangs entspricht oder
die Geschwindigkeit des jeweiligen Verdrängerelements (5a,5b) beim Einschnüren und/oder Abteilen größer ist als die Geschwindigkeit der Transporteinrichtung oder das Verdrängerelemente (5a, 5b) gestoppt werden, wenn die Verdrängerelemente gerade nicht Einschnüren und/oder Abteilen, so dass beliebig lange Portionen herstellbar sind.

11. Vorrichtung nach mindestens einem der Ansprüche 1-10, **dadurch gekennzeichnet, dass** an einem Verbindungselement (4a, 4b) mehrere Verdrängerelemente übereinander angeordnet sind.

12. Vorrichtung nach mindestens einem der Ansprüche 1 -11, **dadurch gekennzeichnet, dass** die Verdrängerelemente (5a,5b) an den Verbindungselementen (4a, 4b) abnehmbar angeordnet sind.

13. Vorrichtung nach mindestens einem der Ansprüche 1-12, **dadurch gekennzeichnet, dass** die Verbindungselemente (4a, 4b) einen ersten Abschnitt (40a) aufweisen, der sich von einer Scheibe (2a, 2b) im Wesentlichen senkrecht in Richtung zur gegenüberliegenden Scheibe (3a,3b) erstreckt und einen zweiten Abschnitt (40b), der sich entweder horizontal, schräg, stufenförmig oder wellenförmig zur gegenüberliegenden Scheibe (3a, 3b) zumindest bis in einen Bereich der Achse erstreckt, um die der Abschnitt drehbar gelagert ist, wobei vorzugsweise der erste Abschnitt das Verdrängerelement (5a, 5b) aufweist.

14. Vorrichtung nach mindestens einem der Ansprüche 1-13, **dadurch gekennzeichnet, dass** die Vorrichtung noch eine dritte Scheibe (50a, 50b) und weitere Verbindungselemente (51a,51b), die in der zweiten und dritten Scheibe drehbar gelagert sind, aufweist, wobei mindestens eines der Verbindungselemente ein Verdrängerelement (5a, 5b) aufweist und die zweite Scheibe (3a,3b) vorzugsweise über die Verbindungselemente (4a, 4b) der ersten und dritten Scheibe drehbar um die zweite Achse (B) gelagert ist.

15. Verfahren zum Einschnüren und/oder Abteilen eines sich in Transportrichtung (T) bewegenden Wurststrangs (20), mit einer Vorrichtung nach mindestens Anspruch 1, wobei die Verbindungselemente (4a,4b) drehbar zwischen der ersten und zweiten Scheibe (2a,2b,3a, 3b) gelagert werden und bei Rotation der ersten Scheibe (2a,2b) um die erste Achse (A) derart geführt werden, dass das mindestens eine Verdrängerelement (5a,5b) während seines Umlaufs um die erste Achse (A) stets unter einem vorbestimmten Winkel, insbesondere 90° zur Transportrichtung (T), ausgerichtet wird, und wobei das jeweilige Verbindungselement (4a, 4b) in der ersten Scheibe (2a, 2b) mit einem jeweiligen Abstand (r) zur ersten Achse (A, C) und in der zweiten Scheibe (3a, 3b) mit dem gleichen Abstand (r) zur zweiten Achse (B, D) drehbar gelagert ist und insbesondere der Abstand (r) für unterschiedliche Verbindungselemente (4a, 4b) gleich oder unterschiedlich ist.

16. Verfahren nach Anspruch 15, **dadurch gekennzeichnet, dass** die Scheiben Bohrungen (7) aufweisen, in denen die Verbindungselemente drehbar gelagert sind und die Bohrungen (7) entweder auf der ersten und zweiten Scheibe (2a,2b,3a,3b) auf einem Kreis mit einem Radius (r) oder auf mehreren Kreisen mit unterschiedlichen Radien angeordnet sind und die Verbindungselemente (5a,5b) in Abhängigkeit der Portionslänge und/oder des Wurstkalibers und/oder der Anzahl von Einzelportionen in einer Wurstkette in entsprechenden Bohrungen (7) gelagert werden und insbesondere die Position der Verbindungselemente (5a,5b) bei sich änderndem Wurstkaliber und/oder der Portionslänge und/oder Anzahl von Einzelportionen in einer Wurstkette entsprechend geändert wird.
